(19) **Europäisches Patentamt**
**European Patent Office**
**Office européen des brevets**

(11)  **EP 2 323 857 B1**

(12)  **EUROPEAN PATENT SPECIFICATION**

(45) Date of publication and mention
of the grant of the patent:
**14.11.2012  Bulletin 2012/46**

(51) Int Cl.:
***B60C 5/14*** *(2006.01)*      ***B29D 30/16*** *(2006.01)*

(21) Application number: **09806417.3**

(86) International application number:
**PCT/EP2009/060229**

(22) Date of filing: **06.08.2009**

(87) International publication number:
**WO 2010/018124 (18.02.2010 Gazette 2010/07)**

(54) **TUBELESS TYRE HAVING A SLITTED INNER-LINER, AND PROCESS FOR ITS MANUFACTURE**

SCHLAUCHLOSER REIFEN MIT GESCHLITZTER INNENVERKLEIDUNG SOWIE VERFAHREN ZU SEINER HERSTELLUNG

PNEU SANS CHAMBRE À AIR COMPRENANT UN REVÊTEMENT INTERNE FENDU, ET SON PROCÉDÉ DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.08.2008  FR 0855584**
**03.11.2008  US 110764 P**

(43) Date of publication of application:
**25.05.2011  Bulletin 2011/21**

(73) Proprietors:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventors:
• **BEAUGRAND, Sébastien**
**F-63370 Lempdes (FR)**
• **LESCLINGANT, Daniel**
**F-63200 St Bonnet Pres Riom (FR)**
• **POMMEYROL, Gilles**
**F-63430 Pont Du Chateau (FR)**

(74) Representative: **Randl, Oliver Georg**
**M.F.P. MICHELIN**
**23, place des Carmes-Déchaux**
**SGD/LG/PI-F35-Ladoux**
**63040 Clermont-Ferrand Cedex 9 (FR)**

(56) References cited:
**EP-A- 1 820 629      EP-A- 1 859 967**

## Description

FIELD OF THE INVENTION

The present invention relates to tubeless tyres, and more particularly the inner-liners that are gastight to the gas for inflating these tyres. It also relates to a process of manufacturing these tyres.

BACKGROUND OF THE INVENTION

Most tubeless tyres designed to be inflated with an inflation gas comprise an "inner-liner", that is to say a rubber compound that is impermeable to the inflation gas, covering the inner surface of the tyre. This inner-liner is most often formed by a butyl-based rubber compound.

The fact that these inner-liners are impermeable to the inflation gas may give rise to problems in tyre manufacture. In particular it has been observed that the air trapped during the making of the tyre may accumulate beneath the inner-liner, in particular at the bead and the radially inner half of the sidewall, so as to form bubbles therein. These bubbles spoil the appearance of the tyre, but their presence may also have consequences on the longevity of the tyre. Specifically, the bubbles may initiate a loss of adhesion of the inner-liner. In serious cases, the inner-liner may detach from the beads and from the inner portion of the sidewall, which causes a certain loss of seal and the penetration of a considerable quantity of air into the materials forming the tyre, which may reduce the lifetime of the tyre. The loss of adhesion would also be a factor to cause the client to replace the tyre. This is why tyre manufacturers examine the tyres after curing in order to detect the presence of bubbles. If the number and/or the size of the bubbles are too great, the tyres are destroyed.

Several solutions have been proposed to overcome this difficulty. As an example, document JP 60196331 proposes to burn holes in the inner-liner with the aid of a laser beam. These holes allow the air to escape during the making of the tyre and the first stages of vulcanization. They close by the inner-liner flowing during vulcanization, which makes it possible to have an intact inner-liner after curing.

Document JP 2005238654 describes another approach using an inner-liner with holes in it and an appropriate mould.

Another solution to the problem of the formation of bubbles consists in reducing the surface area covered by the inner-liner. In particular it is possible for the bead and the radially innermost portion of the sidewall not to be covered with inner-liner. Tyres of this type have been developed for the purpose of lightening the tyre, but they also have the advantage of being less affected by the formation of air bubbles. Such tyres are known, for example, from documents JP 4090902 and EP 1 228 900.

Such tyres nevertheless have disadvantages.

In particular it has been noted that the reduction in the surface area covered by the inner-liner causes an increase in noise generated by the tyre, in particular in the cavity mode frequency domain. The use of such tyres therefore increases the body vibrations of the vehicle to which the tyres are fitted and reduces the acoustic comfort of the user. Moreover, the reduction in the surface area covered by the inner-liner leads to greater losses of inflation pressure over time.

SUMMARY OF THE INVENTION

One objective of the present invention is to provide tubeless tyres the manufacture of which is less prone to the formation of air bubbles between the inner-liner and the adjacent portions of the tyre and that consequently have a better longevity, while allowing to minimise losses of inflation pressure.

This objective is achieved by a tubeless tyre, designed to be inflated with an inflation gas, comprising:

-    a crown comprising a crown reinforcement surmounted by a tread;

-    two sidewalls extending the crown radially inwards;

-    two beads radially inside the sidewalls and each comprising at least one annular reinforcement structure;

-    a carcass reinforcement anchored in each of the beads;

-    an inner-liner impermeable to the inflation gas, covering the inner surface of the tyre.

In each sidewall of a tyre according to an embodiment of the invention, the inner-liner comprises at least one slit situated radially between:

-    the annular reinforcement structure that is radially outermost, and

-    the radius at which the carcass reinforcement, when the tyre is fitted to the rim and inflated to its operating pressure, has its largest axial width.

The slit has a maximum radial height of between 0.5 and 5 mm, preferably between 1.5 and 2.5 mm, and extends over at least half (180°) of the circumference of the tyre.

It has been noted that such a tyre very significantly reduces the formation of bubbles during its manufacture, because the air accumulated between the inner-liner and the adjacent portions of the tyre escapes through the slit provided in the inner-liner. The loss of inflation pressure is significantly reduced compared to tyres having a reduced surface area covered by the inner-liner. In addition, noise measurements have made it possible to ascertain that a tyre according to the invention generates less noise than an equivalent tyre with an inner-liner that does not cover the bead and the radially inner portion of the sidewall.

According to a preferred embodiment, the slit extends over at least three quarters of the circumference of the tyre (in other words, over 270°). Such a slit makes it possible to drain the air over virtually the whole of the circumference. The diffusion path of the rest of the occluded air is sufficiently short to allow the air to be drained in a short time (typically of the order of a few minutes). A single slit may therefore be sufficient to drain all of the occluded air.

Yet more preferably, the slit extends over the whole circumference of the tyre so that all the occluded air is easily drained, without making use of diffusion, in a circumferential direction, of this air towards a slit, which is not instantaneous.

According to a particular embodiment, the radial height of the slit tends towards zero at its ends: so the slit is crescent-shaped.

According to a preferred embodiment, the slit is continuous. Specifically, if the slit is uninterrupted, its capacity to drain air is maximized.

According to an alternative embodiment, the slit includes an alignment of holes in the inner-liner. This embodiment may be advantageous particularly when it is desired to provide a slit which extends over the whole circumference of the tyre. If the slit is continuous, it is then necessary, during the making, to handle three portions of inner-liner. If the slit consists of an alignment of holes (including small slits), that is to say if the inner-liner is only perforated, it may be placed in a single piece, which makes its handling easier.

Another aspect of the invention is directed to a process of manufacturing a tyre, comprising a step of producing the inner-liner of the tyre by placing a strip of rubber compound that is gastight to the gas intended for the inflation of the tyre, on a rigid core rotated about an axis at an angular speed w. The strip of width L is placed on the rigid core with the aid of a strip-placement tool, this placement tool being moved during the placement operation in a direction substantially perpendicular to the axis of rotation of the rigid core, at a speed of movement V. The angular speed w and the speed of movement V are chosen such that a portion of the strip placed at the end of a revolution of the rigid core comes into contact with, but does not overlap a portion of the strip placed at the start of the same revolution of the rigid core, or the contact therebetween also involves an overlap.

This is notably the case if:

$$\int_0^T V(t) \cdot dt \leq L \qquad (1)$$

where T is the time the rigid core takes to make a complete revolution. The equality option of this relationship will produce contact without overlap, whereas the inequality option will produce contact with overlap. Two portions are said to overlap if a part of one portion is superposed on a part of the other portion, in a direction perpendicular to the surface on which the portions are placed.

During the placement of the portion of inner-liner situated radially between:

- the radial position in which, after completion of the tyre manufacturing process, the radially outermost annular reinforcement structure will be situated, and

- the radial height at which the carcass reinforcement, when the tyre, after completion of the tyre manufacturing process, is mounted on the rim and inflated to its working pressure, will have its largest axial width,

the speed of movement of the strip-placement tool and/or the speed of rotation of the rigid core are momentarily, that is to say for a certain time, modified in order to satisfy the inequality

$$\int_0^T V(t) \cdot dt > L \qquad (2)$$

so that a portion of the rigid core is not covered by the strip.

This produces a tyre comprising a crescent-shaped continuous slit. An advantage of this process is that it makes it possible to obtain a tyre by a simple modification of the existing processes, without the need to handle slitted or perforated inner-liner plies.

BRIEF DESCRIPTION OF THE DRAWINGS

Figure 1 represents schematically a tyre according to the prior art.

Figure 2 represents schematically a partial view in perspective of a tyre according to the prior art.

Figure 3 represents schematically a radial section of a portion of a tyre according to the prior art.

Figures 4 and 5 illustrate schematically a recurrent problem in the manufacture of tyres according to the prior art.

Figures 6 to 8 illustrate schematically the loss of adhesion of the inner-liner due to the presence of an air bubble under the inner-liner.

Figure 9 represents schematically a radial section of a portion of a tyre making it possible to overcome the problem of bubble-formation between the inner-liner and the adjacent portions of the tyre in the region of the bead.

Figure 10 represents schematically a radial section of a portion of a tyre according to an embodiment of the invention.

Figures 11 to 15 illustrate schematically possible slit geometries.

Figures 16A to 21C illustrate schematically a first embodiment of the process according to the invention.

Figures 22 to 24 illustrate schematically a second embodiment of the process according to the invention.

Figures 25 to 26 illustrate schematically the radial movement of the placement tool in the first and second embodiments of the process according to the invention.

DETAILED DESCRIPTION OF THE DRAWINGS

It is appropriate to distinguish between several different uses of the word "radial" by those skilled in the art. First, the expression refers to a radius of the tyre. It is in this sense that it is said of a point A that it is "radially internal" to a point B (or "radially inside" the point B) if it is closer to the axis of rotation of the tyre than point B. Conversely, a point C is said to be "radially external to" a point E (or "radially outside" the point E) if it is further away from the axis of rotation of the tyre than the point E. It will be said that there is movement "radially inwards (or outwards)" when there is movement in the direction of the smaller (or larger) radii. When radial distances are referred to, this sense of the term also applies.

In contrast, a thread or a reinforcement is called "radial" when the thread or the reinforcing elements of the reinforcement make an angle that is greater than or equal to 65° and less than or equal to 90° with the circumferential direction. It should be specified that, in the present document, the word "thread" must be understood in a completely general sense and includes the threads that are in the form of monofilaments, multifilaments, a cable, a folded yarn or an equivalent assembly, and this is so irrespective of the material forming the thread or the coating that is applied in order to promote its adhesion with the rubber.

Finally, "radial section" in this instance means a section along a plane that contains the axis of rotation of the tyre.

An "axial" direction is a direction parallel to the axis of rotation of the tyre. A point E is called "axially internal" to a point F (or "axially inside" the point F) if it is closer to the mid-plane of the tyre than the point F. Conversely, a point G is called "axially external to" a point H (or "axially outside" the point H) if it is further away from the mid-plane of the tyre than the point H. The "mid-plane" of the tyre is the plane that is at right angles to the axis of rotation of the tyre and that is equidistant from the annular reinforcement structures of each bead.

A "circumferential" direction is a direction that is perpendicular to both the radius of the tyre and the axial direction.

Two reinforcement elements are said to be "parallel" in this document when the angle formed between the two elements is less than or equal to 20°.

In the context of this document, the expression "rubber compound" is a compound comprising at least one elastomer and one filler.

A "tread" for a tyre is intended to mean a quantity of rubber compound, delimited by two main surfaces of which one is intended to come into contact with the ground when the tyre rolls, and by lateral surfaces.

When it is said that the inner-liner has a "slit" or a "hole", this does not signify that there must be a groove or a recess on the inner surface of the tyre after curing. It is possible that the slit or the hole of the inner-liner is filled with a rubber compound that is not impermeable to the inflation gas, which may be due notably to the flow of the rubber compound forming the portions of the tyre adjacent to the inner-liner, during curing of the tyre. What is important is that there are still slit-shaped or hole-shaped zones where the rubber covering the inner surface of the tyre is not impermeable to the inflation gas.

"Inner surface of the tyre" in this instance means the surface of the tyre that is intended to be in contact with the inflation gas when the tyre is fitted to the rim and inflated.

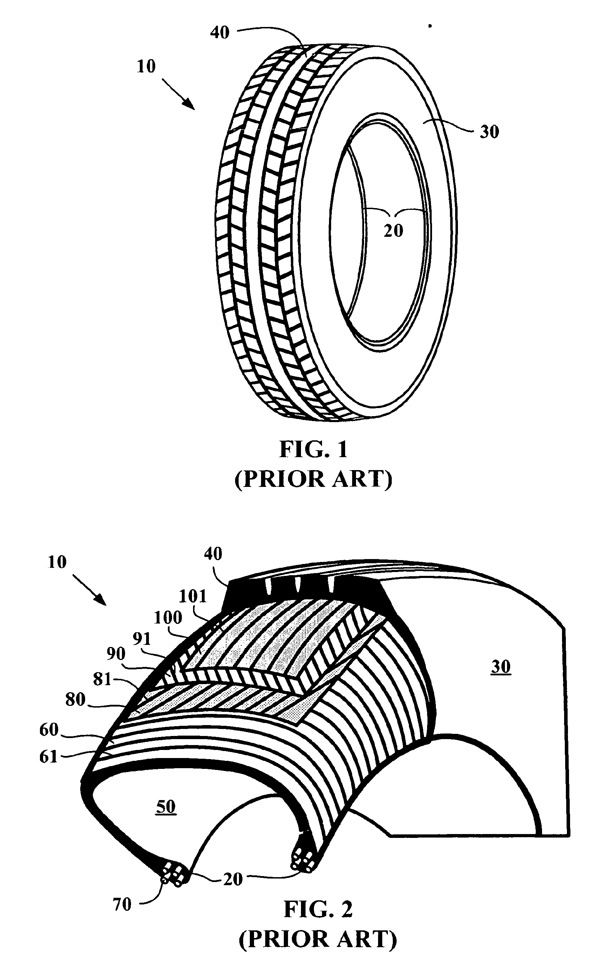

Figure 1 represents schematically a tubeless tyre 10 according to the prior art. The tyre 10 comprises a crown including a crown reinforcement (invisible in figure 1) surmounted by a tread 40, two sidewalls 30 extending the crown radially inwards, and two beads 20 radially inside the sidewalls 30.

Figure 2 represents a partial view in perspective of a different tubeless tyre 10 according to the prior art and illustrates the various components of the tyre. The tyre 10 comprises an "inner-liner" 50 made of a rubber compound impermeable to the inflation gas, covering the inner surface of the tyre 10, a carcass reinforcement 60 made of threads 61 coated with a rubber compound, and two beads 20 each comprising annular reinforcement structures 70 that hold the tyre 10 on the rim (not shown). The carcass reinforcement 60 is anchored in each of the beads 20. The tyre 10 also comprises a crown reinforcement comprising two plies 80 and 90. Each of the plies 80 and 90 is reinforced by thread reinforcing elements 81 and 91 that are parallel in each layer and crossed from one layer to the other, making angles of between 10° and 70° with the circumferential direction. The tyre also comprises a hooping reinforcement 100, positioned radially outside the crown reinforcement, this hooping reinforcement being formed of reinforcement elements 101 oriented circumferentially and spiral-wound. A tread 40 is placed on the hooping reinforcement; it is this tread 40 which makes the contact of the tyre 10 with the road.

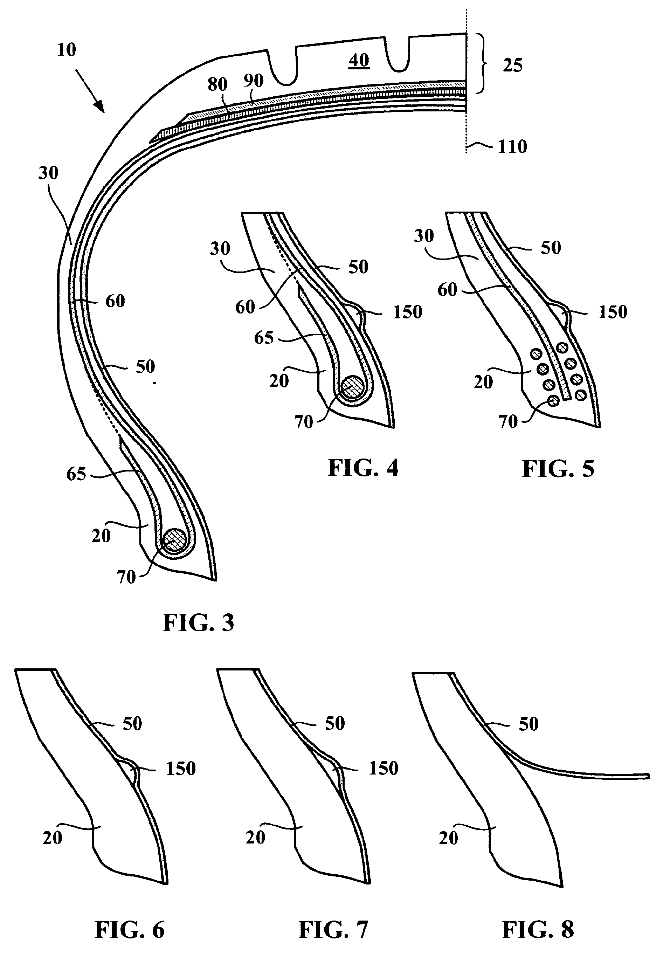

Figure 3 represents schematically, in radial section, a quarter of a tyre 10 according to the prior art. The tyre 10 comprises a crown 25 with a crown reinforcement formed of a first layer of reinforcements 80 and a second layer of reinforcements 90, and surmounted radially by a tread 40. Each layer of reinforcements comprises thread reinforcements, coated with a matrix formed of rubber compound. The reinforcements of each layer of reinforcements are substantially parallel with one another; the reinforcements of the two layers are crossed from one layer to the other at an angle of approximately 20°, as is well known to those skilled in the art for so-called radial tyres. The tyre 10 also comprises sidewalls 30 and two beads 20 each of which comprises an annular reinforcement structure 70, in this instance bead wires. The tyre 10 also comprises a carcass reinforcement 60 which extends from one bead 20 to the other and which is anchored in each of the two beads 20 by a turn-up 65. This carcass reinforcement 60 in this instance comprises thread reinforcements oriented substantially radially, that is to say making an angle greater than or equal to 65° and less than or equal to 90° with the circumferential direction. The inner surface of the tyre is covered with an inner-liner 50. The mid-plane of the tyre 10 bears the reference number 110.

The fact that these inner-liners are impermeable to the inflation gas may give rise to problems in tyre manufacture. In particular it has been observed that the air trapped during the making of the tyre may accumulate beneath the inner-liner, particularly at the bead and the radially inner half of the sidewall, and form bubbles therein. Figure 4 illustrates this recurrent problem in the manufacture of tyres according to the prior art. The lower portion of the sidewall 30 and the bead 20 of the tyre 10 of Figure 3 are shown. In the portion shown, an air bubble 150 has formed between the inner-liner 50 and the adjacent portions of the bead and the sidewall.

The presence of such bubbles when the tyre comes out of its curing mould is in no way limited to tyre architectures such as that represented in Figure 3. It is also possible to find such bubbles in tyres in which the carcass reinforcement 60 is not anchored in the bead 20 by a turn-up 65, but held by a plurality of annular reinforcement structures 70 as shown in Figure 5. Below, only tyres having a turn-up of the carcass reinforcement 60 are shown, but this is in no way a limiting feature of the invention. Each bead 20 has an outermost annular reinforcement structure 70. When bead 20 has a plurality of such structures 70 (as in Figs. 2 and 5), the outermost one is that which is furthest away from the axis of rotation of the tyre. When bead 20 has only a single structure 70, the term "outermost annular reinforcement structure" applies to it.

The air bubbles 150 spoil the visual appearance that the tyre presents to the user before fitting, but their presence may also have consequences on longevity. Specifically, the bubbles may serve as an initiation for the loss of adhesion of the inner-liner. This disadvantage is illustrated in Figures 6 to 8. Figure 6 shows the initial state of the tyre. Gradually as the tyre is used, which means cycles of mechanical stress and heating, the inner-liner 50 separates from the adjacent portions of the tyre in the vicinity of the bubble 150. The latter therefore changes shape and surface area (Figure 7). In serious cases, the inner-liner 50 may detach from the beads 20 and from the inner portion of the sidewall, as shown in Figure 8. This detachment causes a certain loss of seal and the penetration of a considerable quantity of air into the materials forming the tyre. The loss of adhesion would also be a factor to cause the client to replace the tyre.

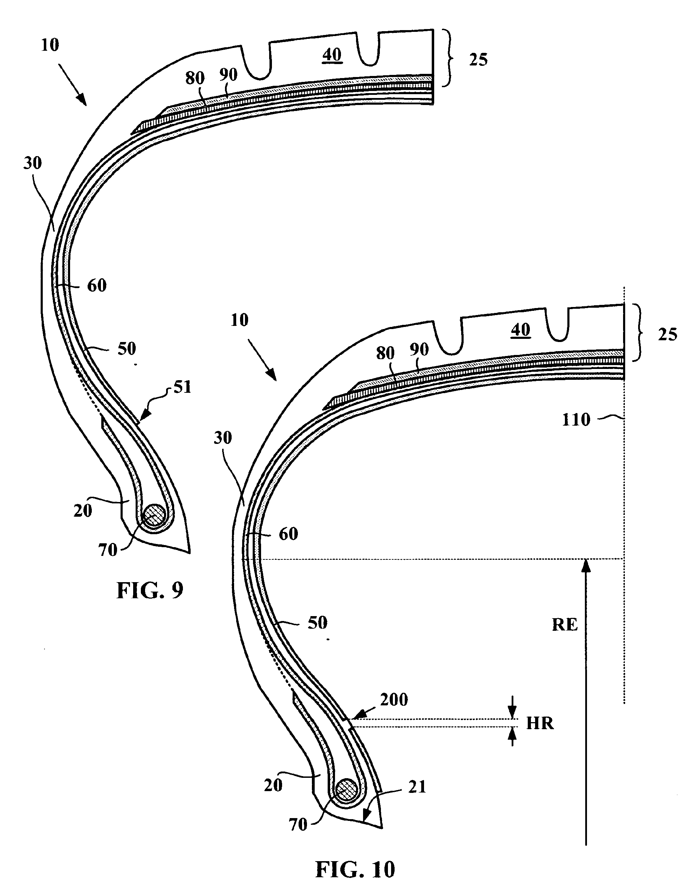

A solution to the problem of the formation of bubbles includes reducing the surface area covered by the inner-liner, as shown in Figure 9. The tyre 10 comprises an inner-liner 50 having its radially inner end 51 located radially outside the bead 20. Inner-liners of this type are notably known from documents JP 4090902 and EP 1 228 900. Naturally, since the inner-liner does not cover a considerable bubble-formation zone and therefore does not trap the air likely to form bubbles, the risk of bubble formation is greatly reduced.

Such tyres nevertheless have disadvantages. In particular it has been noted that the reduction in the surface area covered by the inner-liner causes an increase in noise generated by the tyre, in particular in the cavity mode frequency domain. The use of such tyres therefore increases the body vibrations of the vehicle to which the tyres are fitted and reduces the acoustic comfort of the user. Moreover, the reduction in the surface area covered by the inner-liner leads to greater losses of inflation pressure over time.

This disadvantage is overcome by a tyre according to an embodiment of the invention, such as the tyre 10 shown in Figure 10. The only difference relative to the tyre of Figure 9 is that the inner-liner 50 extends to the radial height of the annular reinforcement structure 70 and comprises, in each sidewall of the tyre, a slit 200, situated radially between the annular reinforcement structure 70 and the radius RE (measured from the axis of rotation of the tyre, which is not represented) at which the carcass reinforcement 60 when the tyre 10 is fitted to its rim (not shown) and inflated to its working pressure, has its largest axial width. The maximum radial height HR of the slit in this embodiment is 2.5 mm. In this instance, the slit 200 is filled with a quantity of rubber compound having flowed from the adjacent portions of the tyre.

It should be noted that there may be a little flow of the inner-liner during the curing of the tyre, which has the effect of reducing the radial height of the slit. In order to obtain a slit of a radial height HR in the cured state, it may be necessary, depending on the materials used, to provide a slit that is slightly larger in the raw state.

It has been found that providing an inner-liner 50 that terminates only at the height of the annular reinforcement structure 70, or which even extends to the seat 21 of the bead, but is interrupted by the slit 200 significantly reduces the problems associated with the air occluded between the inner-liner 50 and the adjacent portions of the tyre. Moreover, this result is accomplished without increasing the noise emitted by the tyre when rolling. This advantage can be explained by the fact that inner-liner 50 is quite hysteretic, whereas the underlying rubber material of the tyre is less so.

Moreover, the static loss of inflation pressure at 20°C is significantly reduced compared to tyres having a reduced surface area covered by the inner-liner. Measurements were carried out on tyres having the general structure of the tyre of Figure 3. A tyre having an inner-liner such as the one in Figure 3 lost 40 mbar of its inflation pressure over a period of four weeks (static conditions, 20°C) For the same tyre without any inner-liner, the losses amounted to 65 mbar. A tyre having a shortened inner-liner (such as the one shown in Figure 9) lost 50 mbar, whereas in a tyre according to the invention (Figure 10) the losses were reduced to 45 mbar.

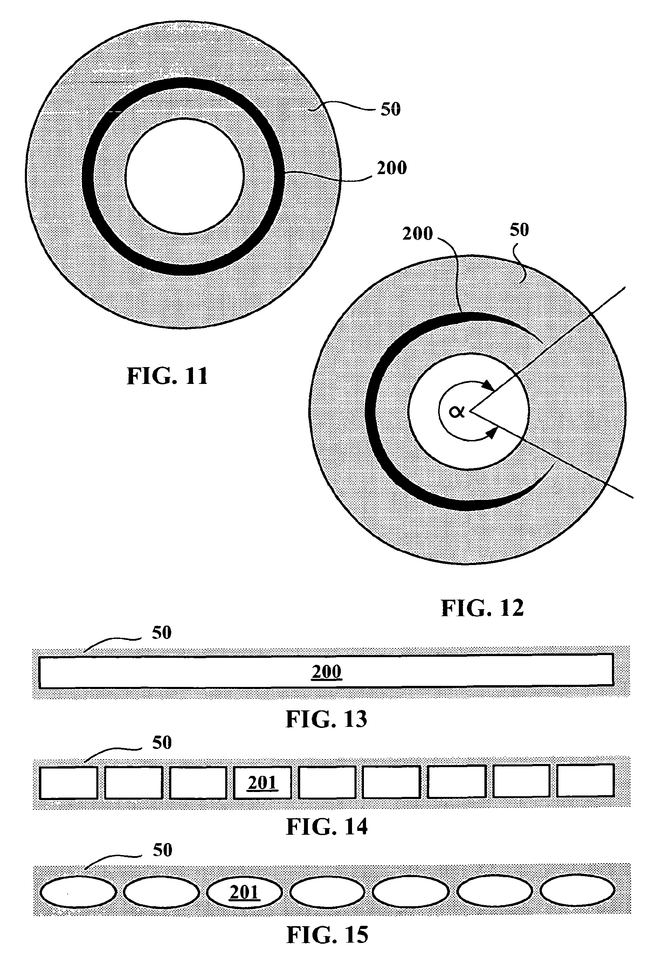

Figures 11 and 12 illustrate schematically certain geometries of possible slits. The view corresponds to a view in circumferential section (in a plane perpendicular to the axis of rotation of the tyre); it shows the inner surface of a sidewall, covered with inner-liner 50 comprising a slit 200.

The slit 200 of Figure 11 has a constant radial height HR of 3 mm and extends over the whole circumference of the tyre. Therefore, all the occluded air is easily drained, without making use of diffusion, in a circumferential direction, of this air towards a slit.

By way of contrast, the slit 200 of the tyre of Figure 12 does not extend over the whole circumference of the tyre, but only over slightly more than three quarters of the circumference of the tyre ($\alpha$ = 295°). The radial height of the slit has a maximum value HR of 3 mm and tends towards zero at its ends: so the slit has a crescent shape. Such a slit makes it possible to drain the air over virtually the whole circumference. The diffusion path of the rest of the occluded air is sufficiently short to allow drainage in a short time. This type of slit may easily be manufactured with the process according to an embodiment of the invention which will be described below.

The concept of "slit", as used in this document, does not only cover a simple continuous slit, such as the slits 200 represented in Figures 11 and 12. It includes slits having an alignment of holes (or of small slits) in the inner-liner. This is illustrated in Figures 13 to 15.

Figure 13 represents a portion of a continuous slit 200, like the slits 200 represented in Figures 11 and 12. Abstraction has been made of the curvature of the tyre. Such a slit has a maximized capacity to drain air.

Figures 14 and 15 each represent a slit including an alignment of holes 201. This process may be advantageous particularly when the slit extends over the whole circumference of the tyre. If the slit is continuous, it is then necessary, during the making, to handle three portions of inner-liner. If the inner-liner is perforated, it may be placed in a single piece, which makes its handling easier.

Those skilled in the art understand that it is easy to obtain a tyre according to the invention by using a ply of airtight rubber compound which is perforated in advance, or by simply assembling several portions of inner-liner with a conventional manufacturing process on a drum. In principle, it would also be possible to cut a slit after the tyre is made. These processes however have the disadvantage of being cumbersome. In addition, a cutting operation on the cured tyre comprises the danger of damaging the tyre. The process according to an embodiment of the invention makes it possible to dispense with these difficulties.

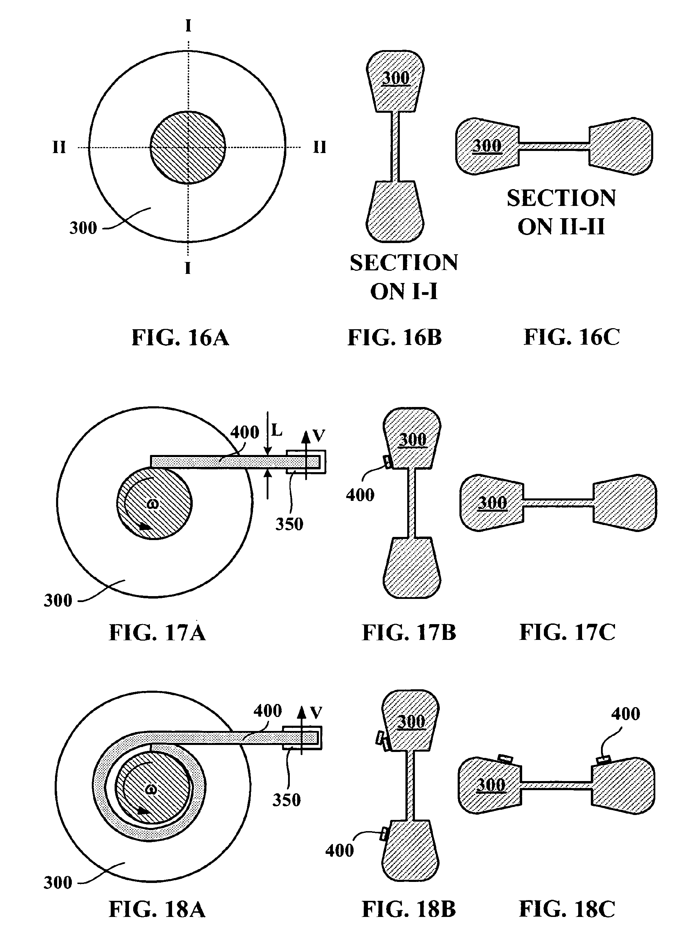

A first embodiment of the process according to the invention is illustrated with the aid of Figures 16A to 21C. Only the essential steps of the process will be described here. Processes including the placement of strips on a rigid core are well known to those skilled in the art. One example among others is given in document EP 0 666 165, which is hereby incorporated herein by reference. The "C3M" process, of which a brief description is presented in the booklet "The Tyre Digest" published by Michelin in 2002, corresponds to such a process.

Figure 16A represents schematically a rigid core 300 that may be rotated about an axis of rotation at an angular speed w. Figures 16B and 16C represent the same rigid core in a section along I-I and in a section along II-II (see Figure 16A), respectively. In the subsequent figures, the portions B and C (e.g. 17B and 17C) still correspond to sections along I-I and II-II, respectively.

Figure 17A shows the first step of a process according to an embodiment of the invention. A strip 400 (width L) of rubber compound impermeable to the gas intended for the inflation of the tyre is supplied by a supply means 350 and applied to the rigid core 300 by the placement tool known per se (which has not been shown, for the sake of clarity). Then, the rigid core 300 is set in rotation at a substantially constant angular speed w. According to the first embodiment of the process according to the invention, the placement tool advances at a substantially constant initial speed $V_0$ in a direction substantially perpendicular to the axis of rotation of the rigid core. The placement tool can be one such as is disclosed in US 2007/0199661, the content of which is hereby incorporated herein by reference.

If the time that the rigid core 300 takes to make one revolution about its axis of rotation is T, one may write

$$T = \frac{2\pi}{\omega} \qquad (3)$$

In order for the portion of strip that will be placed after one revolution of the rigid core to overlap a part of the portion of strip placed during this revolution, the placement tool must be advanced by a distance D that is less than the width L of the strip in the direction perpendicular to the axis of rotation of the rigid core. In mathematical terms, this corresponds to the following inequality:

$$D = \int_0^T V_0 \cdot dt = V_0 \cdot T < L \qquad (4)$$

If the expression (3) is inserted, it is possible to rewrite this inequality as follows:

$$2\pi \cdot \frac{V_0}{\omega} < L \qquad (5)$$

This condition may be satisfied by an appropriate choice of $V_0$ and w.

Figure 18A shows the result obtained after one revolution of the rigid core 300, when the condition (5) is satisfied: there is overlap of the portion of strip 400 placed on the first revolution and the portion of strip that will be added on the second revolution. If the operator continues in these conditions, it is possible to place the whole inner-liner without having the slightest slit on the bead and on the sidewall of the tyre.

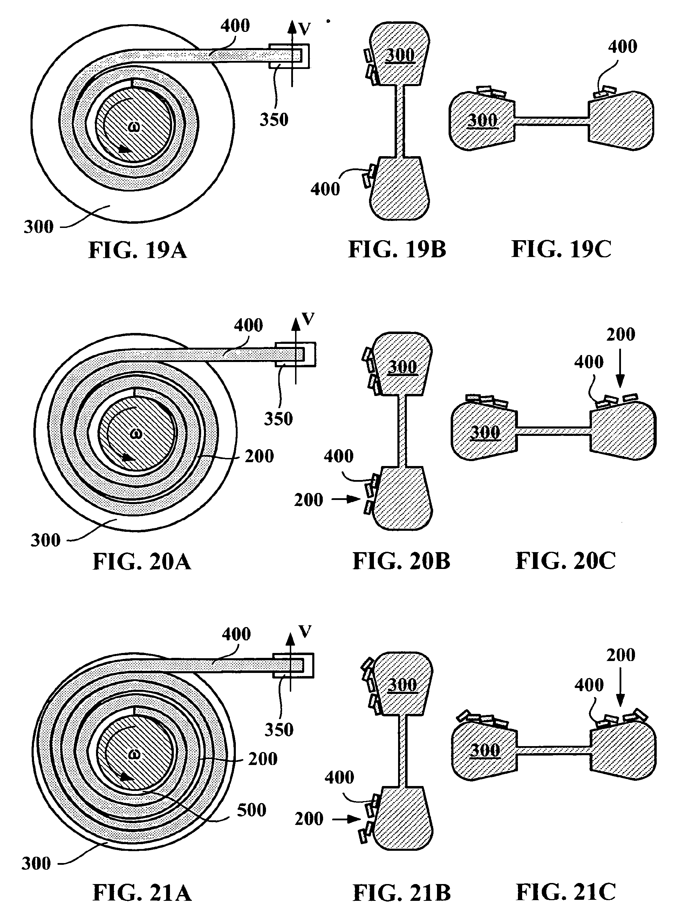

Between the moment shown in Figure 18A and that shown in Figure 19A, the operator begins to place the portion of the inner-liner in the zone situated radially between:

- the radial position in which, after completion of the tyre manufacturing process, the radially outermost annular reinforcement structure will be situated, and

- the radial height at which the carcass reinforcement, when the tyre, after completion of the tyre manufacturing process, is mounted on the rim and inflated to its working pressure, will have its largest axial width.

To obtain a slit in this radial zone, the speed of movement V of the placement tool is increased so that

$$\int_0^T V(t) \cdot dt > L \qquad (6)$$

Naturally, it would also be possible to keep the speed of movement V constant and reduce the angular speed w of the rigid core in order to satisfy this inequality (because T depends on the angular speed w), or to combine the two approaches, by modifying both speeds appropriately. To obtain the best productivity, it is however preferable not to reduce the constant angular speed w and to increase the movement speed V.

At the moment represented in Figure 19A, the formation of the slit has begun. Between this moment and the moment represented in Figure 20A, the operator again changes the speed of movement V (and/or the angular speed w of the rigid core) in order to satisfy the following inequality:

$$\int_0^T V(t) \cdot dt < L \qquad (7)$$

which again results in an overlap of the portions of strip placed successively.

Figures 20A, 20B and 20C indicate the slit 200 which is thus obtained.

Subsequently, the operator continues the placement of the strip in conditions of placement in which the inequality (7) is satisfied.

Therefore, a crescent-shaped slit 200 is obtained in the radial zone mentioned above. In this instance, the slit 200 extends over approximately 300°.

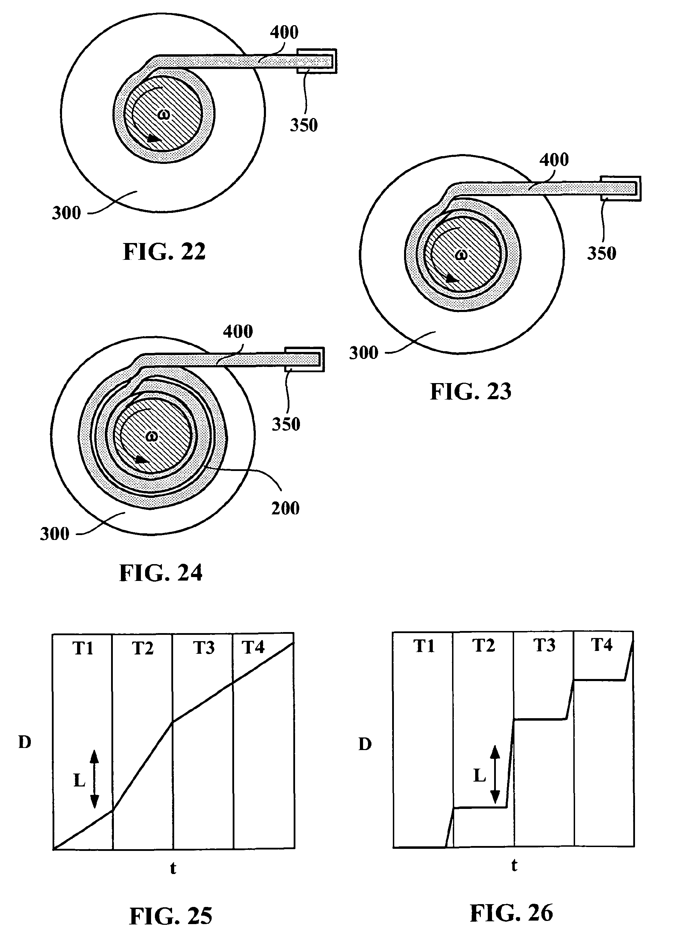

This embodiment of the process according to the invention has the disadvantage that a small portion of the bead, corresponding to the zone 500 of Figure 21A, is not covered with inner-liner. A second embodiment of the process according to the invention, of which certain steps are represented in Figures 22 to 24, makes it possible to overcome this disadvantage.

The starting point is identical to Figure 17. Unlike the first embodiment, the placement tool does not advance for almost the whole duration of the first revolution. Shortly before completing the revolution, the placement tool is moved in a direction perpendicular to the axis of rotation of the rigid core. In order for there to be overlap, the movement must be less than the width L of the strip. The position represented in Figure 22 is then reached. The whole portion which will correspond to the bead of the tyre is therefore covered with inner-liner.

Figure 23 represents the situation after a second revolution of the rigid core. Unlike the previous step, the placement tool has been moved by a distance which is greater than the width L of the strip. A beginning of a slit then forms.

The slit 200 appears clearly in Figure 24 which shows the situation after an additional revolution. Again, the movement of the placement tool at the end of this additional revolution is less than the width L of the strip: the slit 200 is therefore completed.

The rest of the inner-liner is placed while, on each revolution, keeping a movement of the placement tool to less than the width L of the strip.

Figures 25 and 26 represent the movement of the placement tool over time, for the two embodiments of the process.

Figure 25 shows the movement D of the placement tool over time, for the first embodiment of the process according to the invention (Figures 18A-21C). The tool advances at a constant speed (periods of rotation of the core T1, T3, T4), except during the revolution corresponding to the initiation of the slit (period of rotation T2), in which the speed is increased, so that the movement of the placement tool during this revolution exceeds the width L of the strip.

Figure 26 shows the movement D of the placement tool over time, for the second embodiment of the process according to the invention (Figures 22-24). The placement tool does not advance, except towards the end of each revolution of the rigid core. For a slit to be created, this movement at the end of a revolution must exceed the width L of the strip to be placed.

Naturally, it is possible to combine the two embodiments of the process according to the invention by providing more complex movements of the rigid core and of the placement tool. Nevertheless, the fundamental principle remains the same: when the zone where it is desired to create a slit is reached, the respective movements of the rigid core and of the placement tool are changed so that, during one revolution of the core, the placement tool advances radially by a distance that is greater than the width of the strip to be placed.

Although it has not been represented, it is also possible to provide a placement beginning radially on the outside of the rigid core and advancing radially towards the inside of the core.

## Claims

1. Tubeless tyre, adapted to be inflated with an inflation gas, comprising:

   a crown (25) comprising a crown reinforcement (80, 90) surmounted by a tread (40);
   two sidewalls (30) extending the crown radially inwards;
   two beads (20) radially inside the sidewalls and each comprising at least one annular reinforcement structure(70);
   a carcass reinforcement (60) anchored in each of the beads; and
   an inner-liner (50) impermeable to the inflation gas, covering the inner surface of the tyre;
   wherein, in each sidewall of the tyre, the inner-liner comprises at least one slit (200), situated radially between:

      (i) the annular reinforcement structure that is radially outermost, and
      (ii) the radius RE at which the carcass reinforcement, when the tyre is fitted to the rim and inflated to its operating pressure, has its largest axial width; and

   wherein the slit has a maximum radial height HR of between 0.5 and 5 mm and extends over at least half of the circumference of the tyre.

2. Tyre according to Claim 1, wherein the slit (200) extends over at least three quarters of the circumference of the tyre.

3. Tyre according to Claim 1, wherein the slit (200) extends over the whole circumference of the tyre.

4. Tyre according to either one of Claims 1 or 2, wherein the radial height of the slit (200) tends towards zero at its ends.

5. Tyre according to any one of Claims 1 to 4, wherein the slit (200) is continuous.

6. Tyre according to any one of Claims 1 to 3, wherein the slit (200) includes an alignment of holes (201) in the inner-liner (50).

7. Process for manufacturing a tyre according to one of Claims 1, 2, 4 or 5, with the inner-liner (50) of the tyre being produced by placing a strip (400) of rubber compound, that is gastight to the gas intended for the inflation of the tyre, on a rigid core (300) rotated about an axis at a selected angular speed w, the strip of width L being placed on the rigid core with the aid of a placement tool, wherein the process comprises the steps of:

   moving the placement tool during the placement operation in a direction substantially perpendicular to the axis of rotation of the rigid core at a selected speed of movement v such that, due to the angular speed w and the speed of movement V of the placement tool, a portion of the strip placed at the end of a revolution of the rigid core comes into contact with, but does not overlap a portion of the strip placed at the start of the same revolution of the rigid core, or the contact therebetween also involves an overlap; and
   momentarily modifying the speed of movement of the placement tool and/or the angular speed of the rigid core so that a portion of the rigid core is not covered by the strip, wherein such speed modification occurs during placement of a portion of the inner-liner that is situated radially between:

      (i) a radial position in which, after completion of the tyre manufacturing process, the radially outermost annular reinforcement structure will be situated, and
      (ii) a radial height at which the carcass reinforcement, when the tyre, after completion of the tyre manufacturing process, is mounted on the rim and inflated to its working pressure, will have its largest axial width.

**Patentansprüche**

1. Schlauchloser Reifen, der dafür ausgelegt ist, mit einem Aufblasgas aufgeblasen zu werden, und der Folgendes umfasst:

    eine Oberseite (25), die eine Oberseitenverstärkung (80, 90) aufweist, auf die eine Lauffläche (40) aufgebracht ist;
    zwei Seitenwände (30), die sich von der Oberseite radial einwärts erstrecken;
    zwei Wulste (20) radial innerhalb der Seitenwände, wovon jeder wenigstens eine ringförmige Verstärkungsstruktur (70) aufweist;
    eine Karkassenverstärkung (60), die in jedem der Wulste verankert ist; und
    eine Innenverkleidung (50), die für das Aufblasgas undurchlässig ist und die innere Oberfläche des Reifens abdeckt;
    wobei in jeder Seitenwand des Reifens die Innenverkleidung wenigstens einen Schlitz (200) aufweist, der sich radial zwischen:

        (i) der radial äußersten ringförmigen Verstärkungsstruktur und
        (ii) dem Radius *RE*, bei dem die Karkassenverstärkung dann, wenn der Reifen auf der Felge montiert ist und auf seinen Betriebsdruck aufgeblasen ist, ihre größte axiale Breite besitzt,

    befindet; und
    wobei der Schlitz eine maximale radiale Höhe HR im Bereich von 0,5 bis 5 mm besitzt und wenigstens über die Hälfte des Umfangs des Reifens verläuft.

2. Reifen nach Anspruch 1, wobei der Schlitz (200) wenigstens über drei Viertel des Umfangs des Reifens verläuft.

3. Reifen nach Anspruch 1, wobei der Schlitz (200) über den gesamten Umfang des Reifens verläuft.

4. Reifen nach einem der Ansprüche 1 oder 2, wobei die radiale Höhe des Schlitzes (200) an seinen Enden gegen null strebt.

5. Reifen nach einem der Ansprüche 1 bis 4, wobei der Schlitz (200) ununterbrochen ist.

6. Reifen nach einem der Ansprüche 1 bis 3, wobei der Schlitz (200) ausgerichtete Löcher (201) in der Innenverkleidung (50) enthält.

7. Verfahren zum Herstellen eines Reifens nach einem der Ansprüche 1, 2, 4 oder 5, wobei die Innenverkleidung (50) des Reifens durch Anordnen eines Streifens (400) aus einer Gummiverbindung, die für das Gas, mit dem der Reifen aufgeblasen werden soll, gasdicht ist, auf einem starren Kern (300), der mit einer ausgewählten Winkelgeschwindigkeit ω um eine Achse gedreht wird, hergestellt wird, wobei der Streifen mit Breite *L* auf dem starren Kern mithilfe eines Anordnungswerkzeugs angeordnet wird, wobei das Verfahren die folgenden Schritte umfasst:

    Bewegen des Anordnungswerkzeugs während der Anordnungsoperation in einer Richtung, die zu der Drehachse des starren Kerns im Wesentlichen senkrecht ist, mit einer ausgewählten Bewegungsgeschwindigkeit *v*, derart, dass aufgrund der Winkelgeschwindigkeit ω und der Bewegungsgeschwindigkeit *v* des Anordnungswerkzeugs ein Abschnitt des Streifens, der am Ende einer Umdrehung des starren Kerns angeordnet wird, mit einem Abschnitt des Streifens, der am Beginn derselben Umdrehung des starren Kerns angeordnet wird, in Kontakt gelangt, jedoch mit diesem nicht überlappt, wobei alternativ der Kontakt zwischen ihnen auch eine Überlappung umfasst; und
    sofortiges Verändern der Bewegungsgeschwindigkeit des Anordnungswerkzeugs und/oder der Winkelgeschwindigkeit des starren Kerns, so dass ein Abschnitt des starren Kerns nicht mit dem Streifen abgedeckt wird, wobei eine solche Geschwindigkeitsänderung während der Anordnung eines Abschnitts der Innenverkleidung erfolgt, der sich radial zwischen

        (i) einer radialen Position, an der sich nach dem Abschluss des Reifenherstellungsverfahrens die radial äußerste ringförmige Verstärkungsstruktur befindet, und
        (ii) einer radialen Höhe, bei der die Karkassenverstärkung dann, wenn der Reifen nach Abschluss des Reifenherstellungsverfahrens auf der Felge montiert ist und auf seinen Betriebsdruck aufgeblasen ist, ihre größte axiale Breite besitzt,

    befindet.


**Revendications**

1. Pneumatique tubeless, destiné à être gonflé avec un gaz de gonflage, comportant :

    un sommet (25) comprenant une armature de sommet (80, 90) surmontée d'une bande de roulement (40) ;
    deux flancs (30) prolongeant le sommet radialement vers l'intérieur ;
    deux bourrelets (20) radialement intérieurs aux flancs et comportant chacun au moins une structure annulaire de renforcement (70) ;
une armature de carcasse (60) ancrée dans chacun des bourrelets ;
une gomme intérieure (50) imperméable au gaz de gonflage, recouvrant la surface intérieure du pneumatique ;

dans lequel, dans chaque flanc du pneumatique, la gomme intérieure comporte au moins une fente (200), située radialement entre :

(i) la structure annulaire de renforcement radialement la plus à l'extérieur, et
(ii) le rayon RE auquel l'armature de carcasse, lorsque le pneumatique est monté sur la jante et gonflé à sa pression de service, a sa plus grande largeur axiale ; et

dans lequel la fente a une hauteur radiale maximale (HR) comprise entre 0.5 et 5 mm et s'étend sur au moins la moitié de la circonférence du pneumatique.

2. Pneumatique selon la revendication 1, dans lequel la fente (200) s'étend sur au moins trois quarts de la circonférence du pneumatique.

3. Pneumatique selon la revendication 1, dans lequel la fente (200) s'étend sur toute la circonférence du pneumatique.

4. Pneumatique selon l'une quelconque des revendications 1 ou 2, dans lequel la hauteur radiale de la fente (200) tend vers zéro à ses extrémités.

5. Pneumatique selon l'une quelconque des revendications 1 à 4, dans lequel la fente (200) est continue.

6. Pneumatique selon l'une quelconque des revendications 1 à 3, dans lequel la fente (200) inclut un alignement de trous (201) dans la gomme intérieure (50).

7. Procédé de fabrication d'un pneumatique selon l'une des revendications 1, 2, 4 ou 5, comportant une étape de confection de la gomme intérieure (50) du pneumatique par la pose d'une bandelette (400) de composition caoutchouteuse étanche au gaz destiné au gonflage du pneumatique, sur un noyau rigide (300) entraîné en rotation autour d'un axe de rotation à une vitesse angulaire ω, la bandelette de largeur L étant posée sur le noyau rigide à l'aide d'un outil de pose de bandelette,
le procédé comportant les étapes suivantes :

l'outil de pose est déplacé, pendant l'opération de pose, dans une direction sensiblement perpendiculaire à l'axe de rotation du noyau rigide, à une vitesse de déplacement v choisie, de sorte que, en raison de la vitesse angulaire ω et de la vitesse de déplacement V de l'outil de pose, une portion de la bandelette posée à la fin d'une révolution du noyau rigide touche, sans la recouvrir, une portion de la bandelette posée au début de la même révolution, ou le contact entre les deux comporte un recouvrement ; et
la vitesse de déplacement de l'outil de pose et/ou la vitesse angulaire du noyau rigide sont momentanément modifiées de sorte qu'une partie du noyau rigide n'est pas recouverte par la bandelette, cette modification de la vitesse étant effectuée pendant la pose d'une portion de la gomme intérieure qui se situe radialement entre :

(i) une position radiale à laquelle se situera, après l'achèvement du procédé de fabrication du pneumatique, la structure annulaire de renforcement radialement la plus à l'extérieur, et
(ii) une hauteur radiale à laquelle l'armature de carcasse, lorsque le pneumatique, après l'achèvement du procédé de fabrication du pneumatique, est monté sur la jante et gonflé à sa pression de service, aura sa plus grande largeur axiale.

FIG. 1
(PRIOR ART)

FIG. 2
(PRIOR ART)

FIG. 3

FIG. 4

FIG. 5

FIG. 6

FIG. 7

FIG. 8

**FIG. 9**

**FIG. 10**

**FIG. 11**

**FIG. 12**

**FIG. 13**

**FIG. 14**

**FIG. 15**

SECTION
ON I-I

FIG. 16A  FIG. 16B  FIG. 16C

SECTION
ON II-II

FIG. 17A  FIG. 17B  FIG. 17C

FIG. 18A  FIG. 18B  FIG. 18C

**FIG. 19A**

**FIG. 19B**

**FIG. 19C**

**FIG. 20A**

**FIG. 20B**

**FIG. 20C**

**FIG. 21A**

**FIG. 21B**

**FIG. 21C**

**FIG. 22**

**FIG. 23**

**FIG. 24**

**FIG. 25**

**FIG. 26**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60196331 B
- JP 2005238654 B
- JP 4090902 B
- EP 1228900 A
- EP 0666165 A
- US 20070199661 A

**Non-patent literature cited in the description**

- **MICHELIN.** The Tyre Digest. 2002